# EUROPÄISCHE PATENTSCHRIFT

(11) **EP 0 594 917 B1**
(45) Veröffentlichungstag und Bekanntmachung des Hinweises auf die Patenterteilung: **05.03.1997**
(21) Anmeldenummer: 92810835.6
(22) Anmeldetag: 30.10.1992
(51) Int. Cl.: B65G 47/08, B65B 5/10, B65B 35/04, B65B 35/44

(54) **Verfahren zur Uebernahme von kontinuierlich angelieferten Produkten einer Produktionsanlage und zur jeweils diskontinuierliche Abgabe einer Anzahl dieser Produkte bei einer Abgabestation**
Method for taking over continuously delivered products from a production device and for delivering discontinuously a number of those products in a delivering station
Procédé de reprise de produits délivrés de façon continue d'un dispositif de production et de la délivrance discontinue d'un nombre de ces produits dans une station de délivrance

(43) Veröffentlichungstag der Anmeldung: 04.05.1994
(73) Patentinhaber: PAMAG AG, CH-8890 Flums (CH)
(72) Erfinder: Benz, Gottlieb, CH-8890 Flums (CH)
(74) Vertreter: Feldmann, Clarence Paul

(56) Entgegenhaltungen:
- EP-A- 0 438 974
- FR-A- 2 108 600
- FR-A- 2 391 126
- US-A- 4 768 642

## Beschreibung

Die Erfindung bezieht sich auf ein Verfahren zur Uebernahme von einzelnen, länglichen Produkten, vorzugsweise Hülsen oder Tuben, zur Bildung von Produktegruppen gemäss Oberbegriff des Patentanspruches 1. Verfahren dieser Art kommen zur Anwendung, wenn aus einer Produktionsanlage angelieferte Produkte zu Produktegruppen gebildet auf geordnete Weise verpackt werden müssen. Liefert die Produktionsanlage beispielsweise empfindliche Produkte, wie leere Hülsen oder Tuben, müssen diese sorgfältig verpackt an eine Abfüllfirma spediert werden. Die Schwierigkeit dabei ist die, dass der kontinuierlich angelieferte Strom von Produkten bei einer Abgabe-Verpackungsstation angehalten werden muss. Dabei sollten die empfindlichen Produkte möglichst schonend behandelt werden und Stösse vermieden werden.
Bei einem bekannten Verfahren gemäss der EP-A-0'438'974 ist dazu zwischen einer kontinuierlichen Zuführung und einer diskontinuierlichen Abgabe ein Kompensator eingeschaltet, der die fortlaufend angelieferten Produkte kontinuierlich aufnimmt und diskontinuierlich abliefert. Dies erfolgt über eine zwischen Annahme- und Abgabestelle verlaufende Schlaufe einer geschlossenen Kette, die verlängert oder verkürzt werden kann.

Ein solcher Kompensator erlaubt zwar eine schonende Behandlung der Produkte, stellt aber eine erhebliche Verteuerung der Anlage dar.

Ferner ist aus der FR-A-2'391'126 eine Fördervorrichtung bekannt, welche zur Bildung von Produktegruppen einer vorwählbaren Anzahl von Produkteeinheiten mit einer die Produkte abliefernden Fördereinheit in der Gestalt eines Endlosförderbandes sowie mit einer Produktegruppen bildenden Uebernahme- und Fördervorrichtung ausgestattet ist. Letztere besteht aus zwei voneinander getrennt in einer gemeinsamen Umlaufbahn angetriebenen, endlosen Förderorganen, wobei jedes dieser Förderorgane Produkteaufnahmen für die zu bildenden Produktegruppen trägt. Die Förderorgane sind derart angetrieben, dass sich die Produkteaufnahmen abwechselnd in der Belade- oder der Abgabeposition befinden, in der die gebildete Produktgruppe in eine Gruppiereinheit überführt wird.
Während der Zeitspanne, in der die eine Produktaufnahme aus der Belade- zur Abgabeposition fährt, läuft die zweite Poduktaufnahme gleichzeitig von der Abgabeposition zur Beladeposition. Während der Laufzeit befindet sich keine der beiden Produktaufnahmen in der Beladeposition und die Produkteeinheiten lassen sich mittels einer Klappe auf dem die Produkte anliefernden Endlosförderband zurückhalten, bis sich wieder eine der beiden Produktaufnahmen in der Beladeposition befindet. Dies erlaubt die aneinander anliegenden Produkte vom Takt der Produktionsmaschine unabhängig mit hoher Geschwindigkeit zu gruppieren.

Die Erfindung hat sich zum Ziel gesetzt ein Verfahren zu schaffen, das eine schonende Behandlung der Produkte gewährleistet, aber ohne Kompensator auskommt, unter Beibehaltung des Taktes der Produktionsmaschine.
Das erfindungsgemässe Verfahren zeichnet sich durch die im kennzeichnenden Teil des Patentanspruches 1 genannten Merkmale aus.
In der beigefügten Zeichnung ist beispielsweise eine Uebernahme- und Fördervorrichtung zur Durchführung des erfindungsgemässen Verfahrens an Hand einer Maschine zum Verpacken von Tuben in Schachteln vereinfacht dargestellt.

Die Zeichnung zeigt in
- Figur 1: eine Maschine, welche von einer Produktionsanlage kontinuierlich angelieferte Tuben diskontinuierlich bei einer Abgabestelle mit einer Schachtel-Füllanlage abgibt;
- Figur 2: zeigt die Maschine nach Figur 1 in Ansicht von oben und
- Figur 3: einen Teil derselben Maschine in Seitenansicht;
- Figur 4: den zeitlichen Bewegungsablauf der Produktegruppen.

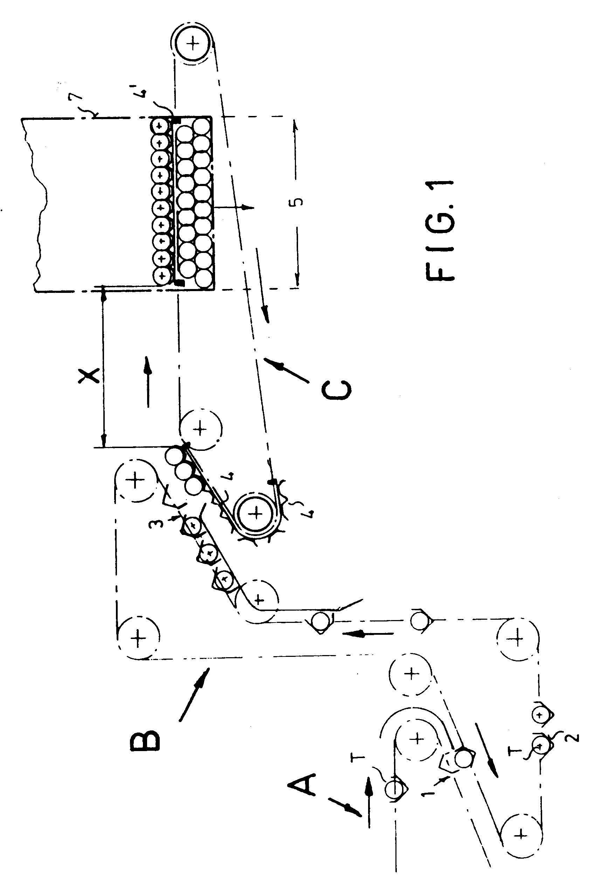

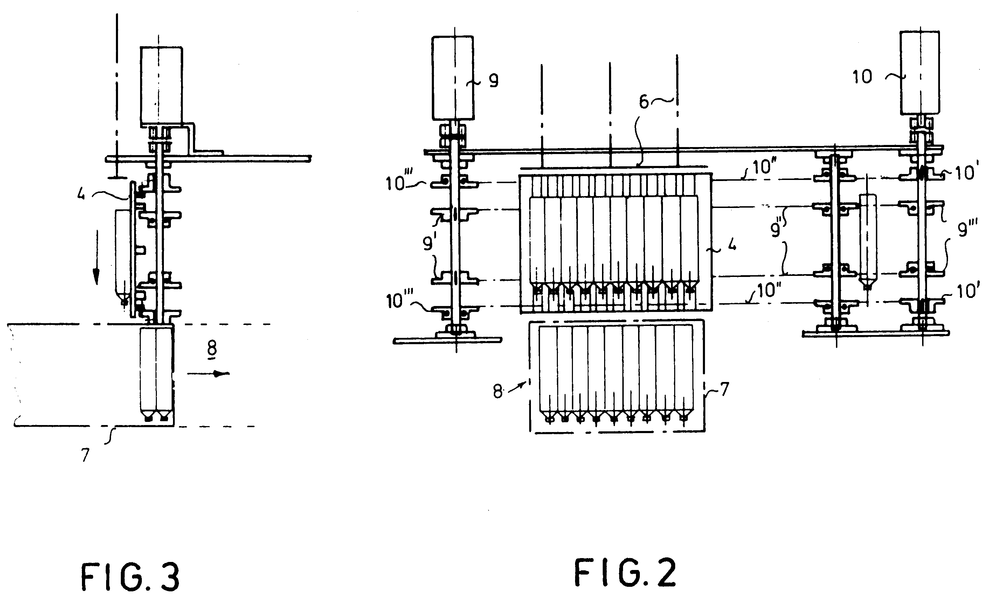

In Figur 1 ist wegen des besseren Verständnisses das Endteil einer Produkte anliefernden Fördereinheit A der Produktionsanlage dargestellt, welche in kontinuierlicher Folge Tuben T anliefert.
Die anzuliefernden Tuben gelangen über eine weitere Fördereinheit B zur eigentlichen Uebernahme- und Fördervorrichtung C. Die Tuben T werden an der Uebergabestelle 1 auf Behälter 2 der anliefernden Fördereinheit somit voneinander beabstandet übergeben, welche sie an der Beladeposition 3 an die Uebernahme- und Fördervorrichtung C übergibt. Das Förderband oder die Förderkette der anliefernden Fördereinheit werden synchron im gleichen Takt getrieben, wie die Produktionsanlage die Tuben anliefert und fördert. In derselben Geschwindigkeit fördert die weitere Fördereinheit B die Tuben zur Beladeposition 3, wo sie die Tuben oder Hülsen an die Uebernahme- und Fördervorrichtung C abgibt. Die Tuben gelangen hier auf einen ersten, ebenfalls im Takt der ankommenden Tuben schrittweise weiterbewegten Produkteaufnahmegruppe 4, die nachdem sie gefüllt ist, in raschem Tempo zu einer Abgabestation 5 gefördert wird. Dort hält sie kurzzeitig an, worauf ein quer zur Förderrichtung bewegter Schieber 6 sämtliche auf der Produkteaufnahmegruppe 4 befindlichen Tuben in eine als Gruppiereinheit dienende, bereitstehende Schachtel 7 einer Schachtel-Füllanlage 8 schiebt. Die nun entleerte erste Gruppe von Produkteaufnahmen 4 wird anschliessend rasch bis in den Bereich der Beladeposition 3 herangeführt, bis sie an das Ende einer zweiten Gruppe von Produktaufnahmen 4' anschliesst, die während der Zeit, welche die erste Gruppe 4 für die Fahrt zur Abgabeposition, zum Entladen und zur Rückführung benötigt, geladen wird.
Auf diese Weise ist ein kontinuierliches Laden jeweils eines der beiden aufeinanderfolgenden Gruppen von Produktaufnahmen an der Beladeposition 3 mit diskontinuierlicher Abgabe der Tuben bei der Schachtel-Füllanlage möglich. Nur in Figur 1 sind beide Gruppen 4 und 4' dargestellt. Die Gruppe 4 befindet sich momentan an der Beladeposition 3 und wird beladen, während die Gruppe 4' bereits zur Abgabeposition 5 gefahren ist, wo sie entladen wird. Der Uebersichtlichkeit halber ist in den Figuren 2 und 3 nur eine Gruppe 4, 4' dargestellt, da ja der Abstand der beiden Gruppen von Produkteaufnahmen voneinander sich während des Betriebes der Maschine ständig ändert.
Vorzugsweise sind die Gruppen so gewählt, dass sie eine Anzahl von Tuben aufnehmen können, die eine vollständige Lage in der Schachtel 6 einnehmen. Die Schachtel-Füllanlage ist so ausgebildet, dass sie nach jedem Entleerungsvorgang einer Gruppe die Schachtel jeweils um eine Lage absenkt. Für jeden der beiden Gruppen 4,4' ist ein eigener Antrieb mit einem elektronisch gesteuerten Elektroschrittmotor 9, beziehungsweise 10 vorgesehen (siehe Figur 2). So treibt hier beispielsweise der Antriebsmotor 10 mittels Kettenräder 10' zwei parallel geführte Ketten 10'' die erste Gruppe 4. Die Ketten werden durch auf der Welle des Antriebes 9 angebrachte Räder 10''' umgelenkt. Damit die Gruppe den Umlenkbewegungen der Ketten folgen kann, ist sie entsprechend gelenkig ausgebildet. Auf gleiche Weise wird die zweite, nicht dargestellte Gruppe, vom Motor 9' mittels der Ketten 9'' angetrieben.

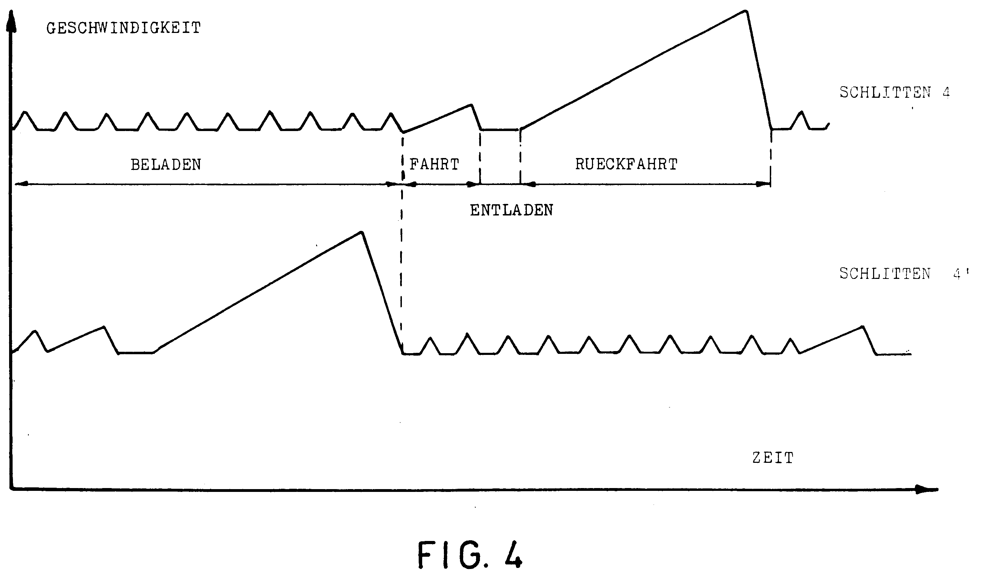

In Figur 4 ist der zeitliche Bewegungsablauf beider Gruppen in Relation zueinander dargestellt. Die Y-Achse deutet die Bewegungsgeschwindigkeit an. Wohlgemerkt lässt sich die jeweilige Distanz zwischen den beiden Gruppen aus dem Diagramm nur indirekt ablesen aus Fahrzeit und Geschwindigkeit.
Die in Figur 1 angegebene Strecke X kann relativ kurz sein, da eine beladene Gruppe von Produktaufnahmen bis an, oder gegebenenfalls teilweise in die Abgabeposition 5 gefahren sein kann. Die Fahrzeit einer beladenen Gruppe zur Abgabeposition, sowie auch die Entladezeit sind relativ kurz, so dass der entladenen Gruppe relativ viel Zeit für die Rückfahrt bis zum Anschluss an die Gruppe, die beladen wird, zur Verfügung steht.

Zum Schluss sei noch bemerkt, dass wenn die Raumverhältnisse dies gestatten und die Uebergabestelle 1 am Endteil A der Produktionsanlage sich auf der richtigen Höhe über dem Boden befindet, die Produktegruppen bildende Uebernahme- und Fördervorrichtung C die Produkte direkt übernehmen kann.
Unter Umständen kann auch die Maschine auf einem tieferen Niveau aufgestellt werden, damit sie die Produkte an der Uebergabestelle 1 direkt übernehmen kann. Es wird dann keine weitere Fördereinheit B mehr benötigt, was die Gesamtanlage verbilligt.
Die Steuerung der Gruppen in der Beladeposition, beziehungsweise des Antriebsmotors erfolgt nach Massgabe der ankommenden Hülsen oder Tuben. Daher wird die Beladeposition optoelektronisch überwacht, so dass bei einem Produktionsausfall oder beim Ankommen eines leeren Behälters 2 wegen einer ausgeschiedenen Tube oder Hülse die Gruppe stehen bleibt. Anderenfalls würde die Maschine leer laufen oder in der Schachtel Leerstellen auftreten.

## Patentansprüche

1. Verfahren zur Uebernahme von einzelnen, länglichen Produkten (T), vorzugsweise Hülsen oder Tuben, zur Bildung von Produktegruppen einer vorwählbaren Anzahl von Produkteeinheiten, mit einer die Produkte anliefernden Fördereinheit (A,B), einer Produktegruppen bildenden Uebernahme- und Fördervorrichtung (C), die aus zwei voneinander getrennt in einer gemeinsamen Umlaufbahn angetriebenen, endlosen Förderorganen (9'',10'') besteht, wobei jedes dieser Förderorgane Produktaufnahmen (4,4') für die zu bildenden Produktegruppen trägt und diese Förderorgane (9'',10'') derart angetrieben sind, dass diese Produktaufnahmen sich abwechselnd in der Belade- oder der Abgabeposition befinden, in der die gebildete Produktegruppe in eine Gruppiereinheit (7) überführt wird, dadurch gekennzeichnet, dass die anliefernde Fördereinheit (A,B) die Produkte (T) voneinander beabstandet im Takt der Produktionsmaschine kontinuierlich anliefert, dass die Förderorgane (9'',10'') derart angetrieben werden, dass beide Produktaufnahmen (4,4') übergangslos aufeinanderfolgend in die Beladeposition verbracht und dort beladen werden.

2. Verfahren nach Anspruch 1, dadurch gekennzeichnet, dass die aus einer an der Abgabeposition (5) anhaltenden Gruppe von Produktaufnahmen (4,4') geförderten Produkte (T) mittels eines quer zur gemeinsamen Umlaufbahn der angetriebenen, endlosen Förderorgane (9'',10'') geführten hin- und herbewegten Schiebers (6) aus der Gruppe weggeschoben werden.

3. Verfahren nach den Ansprüchen 1 oder 2, dadurch gekennzeichnet, dass an der Abgabeposition (5) bei einer Schachtel-Füllanlage eine Gruppiereinheit (7) aufgestellt ist, in welche der Schieber (6) jeweils eine Gruppenlage länglicher Produkte hineinschiebt, wozu die Gruppiereinheit jeweils nach dem Einschieben einer Lage um die Höhe der Schicht abgesenkt wird.

4. Verfahren nach Anspruch 3, dadurch gekennzeichnet, dass man der Uebergabestelle (1) der Produktionsanlage eine weitere Fördereinheit (B) nachschaltet, welche die Produkte von der Uebgabestelle (1) der anliefernden Fördereinheit (A) zur Beladeposition (3) der Schachtel-Füllanlage fördert.

## Claims

1. Method for taking over individual, elongated products (T), preferably sleeves or tubes, for forming product groups of a preselectable number of product units, with a conveyor unit (A, B) supplying the products, a product group-forming takeover and conveyor mechanism (C), which comprises two separate, endless conveyor members (9'', 10'') driven in a common circular path, each of the conveyor members carrying product receptacles (4, 4') for the product groups to be formed and said conveyor members (9'', 10'') are so driven that the said product receptacles are located alternately in the loading or delivery position, in which the product group formed is transferred into a grouping unit (7), characterized in that the supplying conveyor unit (A, B) continuously supplies the products (T) spaced from one another in the time cycle of the production machine, that the conveyor members (9'', 10'') are so driven that both product receptacles (4, 4') are brought in transitionless succeeding manner into the loading position and are loaded there.

2. Method according to claim 1, characterized in that the products (T) conveyed from a group of product receptacles (4, 4') stopping at the delivery position (5) are slid out of the group by a slide (6) moved backwards and forwards at right angles to the common circular path of the driven, endless conveyor member (9'', 10'').

3. Method according to claims 1 or 2, characterized in that at the delivery position (5) in a box filling plant is installed a grouping unit (7), in which the slide (6) in each case slides in a group layer of elongated products, for which purpose the grouping unit is lowered by the height of the layer following the sliding in of such a layer.

4. Method according to claim 3, characterized in that the takeover station (1) of the production plant is followed by a further conveyor unit (B), which conveys the products from the takeover station (1) of the supplying conveyor unit (A) to the loading position (3) of the box filling plant.

## Revendications

1. Procédé pour la reprise de produits (T) allongés, séparés, de préférence de sachets ou de tubes, pour la formation de groupes de produits d'un nombre prédéterminable d'unités de produits, avec une unité de transport (A,B) délivrant les produits et une installation de réception et de transport (C) formant des groupes de produits, qui consiste en deux organes de transport (9'',10'') sans fin, séparés l'un de l'autre, actionnés dans une trajectoire sans fin, tandis que chacun de ces organes de transport porte des réceptacles de produits (4,4') pour les groupes de produits à former et que ces organes de transport (9'',10'') sont entraînés de telle façon que ces réceptacles de produits se trouvent alternativement dans la position de chargement ou dans la position de délivrance, dans laquelle le groupe de produits formé est transféré dans une unité de groupage (7), caractérisé en ce que l'unité de transport assurant la délivrance (A,B) délivre les produits (T) en continu, séparés les uns des autres, en phase avec la machine de production, et que les organes de transport (9'',10'') sont actionnés de telle façon que les deux groupes de réceptacles de produits (4,4') sont amenés successivement, sans transition, dans la position de chargement et y sont chargés.

2. Procédé selon la revendication 1, caractérisé on ce que les produits (T) transportés provenant d'un groupe de réceptacles de produits (4,4') s'arrêtant dans la position de délivrance (5) sons poussés hors du groupe au moyen d'un poussoir (6) a mouvement alterné, se déplaçant perpendiculairement à la commune trajectoire en cycle de l'organe de transport sans fin entraîné (9'',10'').

3. Procédé selon les revendications 1 ou 2, caractérisé en ce qu'est dispasée dans la position de délivrance (5) sur une installation de remplissage de cartons une unité de groupage (7), dans laquelle le poussoir (6) pousse à chaque fois une couche d'un groupe de produits allongés, tandis que l'unité de groupage est à chaque fois abaissée, après l'introduction par pousage d'une couche, de la hauteur de la couche.

4. Procédé selon la revendication 3, caractérisé en ce qu'on intercale après le poste de transfert (1) de l'installation de production une autre unité de transport (B), qui transporte les produits de la position de transfert (1) de l'unité transporteuse de délivrance (A) à la position de chargement (3) de l'installation de remplissage de cartons.
